# EUROPEAN PATENT APPLICATION

(11) **EP 3 620 484 A1**
(43) Date of publication of application: **11.03.2020**
(21) Application number: 18192591.8
(22) Date of filing: 04.09.2018
(51) Int. Cl.: C08J 7/04, C09D 175/04

(54) **POLYCARBONATE ARTICLES FOR CONSUMER ELECTRONICS**

(71) Applicant: SABIC Global Technologies B.V., 4612 PX Bergen op Zoom (NL)
(72) Inventor: ZHANG, Fen, Kangqiao Pudong, Shanghai 201319 (CN); LAI, Hengjie, Kangqiao Pudong, Shanghai 201319 (CN); NIU, Yaming, Kangqiao Pudong, Shanghai 201319 (CN); FANG, Yapeng, Shangai 201319 (CN)
(74) Representative: Balder IP Law, S.L.

(57) **Abstract**

A polycarbonate article comprises: a substrate comprising a poly(carbonate-bisphenol arylate ester) composition that comprises, based on the total weight of the poly(carbonate-bisphenol arylate ester) composition, 90 to 99.9 wt.%, preferably 95 to 99.9 wt.% of a poly(carbonate-bisphenol arylate ester), and 0.1 to 10 wt.%, preferably 0.1 to 5 wt.% of an additive comprising at least one of a processing aid, a heat stabilizer, an antioxidant, and an ultra violet light absorber; and a siloxane urethane acrylate coating disposed on at least a portion of a surface of the substrate, the siloxane urethane acrylate coating having a thickness of greater than or equal to 8 micrometers; wherein the article has a pencil hardness of 2H or harder when measured according to ASTM D3363-00 at 1,000 g force on the siloxane urethane acrylate coating.

## Description

### BACKGROUND

This disclosure relates to polycarbonate articles, and their methods of manufacture, and in particular coated polycarbonate articles for consumer electronics, and their methods of manufacture.

Polycarbonates are useful in a wide variety of applications at least in part because of their good balance of properties, such as moldability, heat resistance and impact properties, among others. Despite extensive research on these materials over the years, there still remains a need in the art for improved polycarbonates, in particular, polycarbonate articles that meet increasingly stringent industry standards for consumer electronics such as mobile phone housing applications.

### SUMMARY

A polycarbonate article comprises: a substrate comprising a poly(carbonate-bisphenol arylate ester) composition that comprises, based on the total weight of the poly(carbonate-bisphenol arylate ester) composition, 90 to 99.9 wt.%, preferably 95 to 99.9 wt.% of a poly(carbonate-bisphenol arylate ester), and 0.1 to 10 wt.%, preferably 0.1 to 5 wt.% of an additive comprising at least one of a processing aid, a heat stabilizer, an antioxidant, and an ultra violet light absorber; and a siloxane urethane acrylate coating disposed on at least a portion of a surface of the substrate, the siloxane urethane acrylate coating having a thickness of greater than or equal to 8 micrometers; wherein the article has a pencil hardness of 2H or harder when measured according to ASTM D3363-00 at 1,000 grams force on the siloxane urethane acrylate coating.

A method for forming a coated article as described above comprises coating the substrate with the siloxane urethane acrylate coating to form a coated substrate, wherein the siloxane urethane acrylate coating comprises a curing agent, a solvent, a radiation polymerizable siloxane urethane acrylate.

### DETAILED DESCRIPTION

The inventors hereof have found that polycarbonate articles having excellent scratch resistance can be obtained by coating a substrate containing a poly(carbonate-bisphenol arylate ester) composition with a siloxane urethane acrylate coating. In particular, the poly(carbonate-bisphenol arylate ester) composition itself has balanced ductility, impact, and optical properties. Applying a siloxane urethane acrylate coating to a substrate containing a poly(carbonate-bisphenol arylate ester) composition significantly improves the scratch resistance of the substrate without adversely affecting one or more desired properties of the substrate. The polycarbonate articles can also have good anti-abrasion resistance. In a further advantageous feature, an excellent adhesion can be achieved between the siloxane urethane acrylate coating and the substrate comprising the poly(carbonate-bisphenol arylate ester) composition.

With the discovery, it is now possible to manufacture articles that have a pencil hardness of 2H or harder when measured according to ASTM D3363-00 at 1,000 grams (g) force or even a pencil hardness of 3B or harder when measured according to ASTM D3363-00 at 1,000 g force. The results are surprising because not all the polycarbonate substrates can achieve a pencil harness of 2H or harder when coated with the same siloxane urethane acrylate coating. In addition, when the same poly(carbonate-bisphenol arylate ester) substrate is coated with a coating other than a siloxane urethane acrylate coating, the coated article also does not necessarily achieve a pencil harness of 2H or harder when measured according to ASTM D3363-2000 at 1,000 grams (g) force.

The articles according to the disclosure can be thin wall articles that have excellent impact resistance and good ductility. Such articles can advantageously be used in consumer electronic applications such as mobile phone housing applications.

Accordingly, in an embodiment, disclosed are polycarbonate articles comprising a poly(carbonate-bisphenol arylate ester) substrate and a siloxane urethane acrylate coating disposed on at least a portion of a surface of the substrate.

The poly(carbonate-bisphenol arylate ester) substrate comprises a poly(carbonate-bisphenol arylate ester) composition, which contains 90 to 99.9 wt.%, preferably 95 to 99.9 wt.% of a poly(carbonate-bisphenol arylate ester) and 0.1 to 10 wt.%, preferably 0.1 to 5 wt.% of an additive comprising at least one of a processing aid, a heat stabilizer, an antioxidant, an ultra violet light absorber, and a flame retardant, each based on the total weight of the poly(carbonate-bisphenol arylate ester) composition.

The poly(carbonate-bisphenol arylate ester) comprises repeating aromatic carbonate units, and aromatic ester (arylate) units. The carbonate units are repeating units of formula (1) 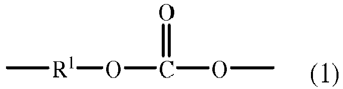 wherein at least 60 percent of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3):

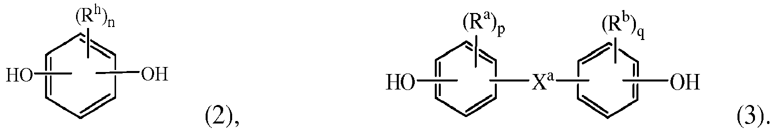

In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4, preferably 0.

In formula (3), R^{a} and R^{b} are each independently a halogen, a C₁₋₁₂ alkoxy, or a C₁₋₁₂ alkyl, and p and q are each independently integers of 0 to 4, such that when p or q is less than 4, the valence of each carbon of the ring is filled by hydrogen. In an embodiment, p and q are each 0, or p and q are each 1, and R^{a} and R^{b} are each a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, - S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d}) - wherein R^{c} and R^{d} are each independently hydrogen, a C₁₋₁₂ alkyl, a C₁₋₁₂ cycloalkyl, a C₇₋₁₂ arylalkyl, a C₁₋₁₂ heteroalkyl, or a cyclic C₇₋₁₂ heteroarylalkyl; or a group of the formula -C(=R^{e})- wherein R^{e} is a divalent C₁₋₁₂ hydrocarbon group.

Some illustrative examples of specific dihydroxy compounds include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA",), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), and 1,1-bis(4-hydroxy-3-methylphenyl)-3,3,5-trimethylcyclohexane (isophorone bisphenol).

In an embodiment, the polycarbonate units are derived from bisphenol A.

The poly(carbonate-bisphenol arylate ester) further comprises arylate units of formula (4) 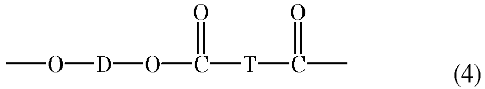 wherein D is a divalent group derived from a dihydroxy compound, and can be, for example, a C₆₋₂₀ alicyclic group or a C₆₋₂₀ aromatic group; and T is a divalent C₆₋₂₀ arylene group. In an embodiment, D is derived from a dihydroxy aromatic compound of formula (2), formula (3) or a combination comprising at least one of the foregoing dihydroxy aromatic compounds. The D and T groups are desirably minimally substituted with hydrocarbon-containing substituents such as alkyl, alkoxy, or alkylene substituents. In an embodiment, less than 5 mol%, specifically less than or equal to 2 mol%, and still more specifically less than or equal to 1 mol% of the combined number of moles of D and T groups are substituted with hydrocarbon-containing substituents such as alkyl, alkoxy, or alkylene substituents.

Examples of aromatic dicarboxylic acids from which the T group in the arylate unit of formula (4) is derived include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of isophthalic acid to terephthalic acid is 99:1 to 1:99.

In an embodiment, the arylate units are derived from the reaction of a phthalic diacid (or a derivative thereof) with resorcinol (or a reactive derivative thereof). In such an embodiment, the arylate units are referred to as isophthalate-terephthalate-resorcinol units ("ITR" ester units) and are of formula (5) 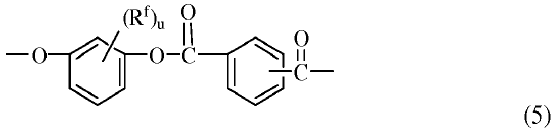 wherein each R^{f} is independently a C₁₋₁₀ hydrocarbyl group such as a C₁₋₁₀ alkyl, and u is 0 to 4, preferably 0.

In some embodiments, the carbonate units and the ester units are present as blocks of formula (6) 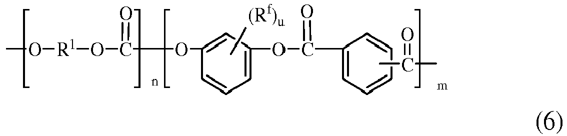 wherein R^{f}, and u are as defined in formula (5), each R¹ is independently a C₆₋₃₀ arylene group, m is 4 to 100, 4 to 50, specifically 5 to 30, more specifically 5 to 25, and still more specifically 10 to 20, and n is greater than or equal to one, for example 3 to 50, specifically from 5 to 25, and more specifically from 5 to 20. In an embodiment, m is 5 to 75 and n is 3 to 50, or m is 10 to 25 and n is 5 to 20, and the molar ratio of isophthalate- resorcinol units to terephthalate- resorcinol units is 80:20 to 20:80.

A specific example of a poly(carbonate-bisphenol arylate ester) is a poly(bisphenol-A carbonate)-co-poly(isophthalate-terephthalate-resorcinol ester) of formula (6a) 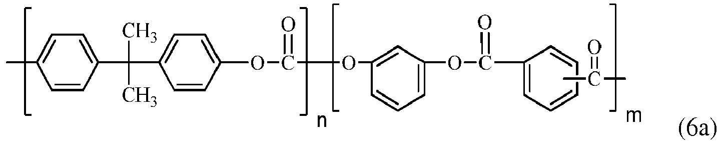 wherein m and n are as defined in formula (6), and the mole ratio of n:m is 99:1 to 1:99, specifically 90:10 to 10:90. Other carbonate units, other ester units, or a combination thereof can be present, in a total amount of 1 to 20 mole% based on the total moles of the units in the copolymers, for example resorcinol carbonate units of the formula 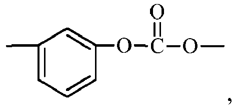 and isophthalic acid-terephthalic acid-bisphenol-A phthalate ester units of the formula 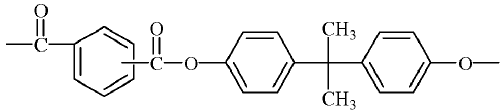 can be present.

In an embodiment, poly(carbonate-bisphenol arylate ester) (6a) comprises 1 to 20 mol% of bisphenol-A carbonate units, 60-98 mol% of isophthalic acid-terephthalic acid-resorcinol ester units, and optionally 1 to 20 mol% of resorcinol carbonate units, isophthalic acid-terephthalic acid-bisphenol-A phthalate ester units, or a combination comprising at least one of the foregoing, each based on the total moles of the units in the poly(carbonate-arylate ester).

The poly(carbonate-arylate ester)s can be prepared by methods known in the art. For example, the copolymers can be prepared from polycarbonate blocks and polyester blocks. Polycarbonate blocks and polyester blocks can be obtained by interfacial polymerization or melt polymerization.

In addition to the poly(carbonate-bisphenol arylate ester), the poly(carbonate-bisphenol arylate ester) compositions can include various additives ordinarily incorporated into polymer compositions of this type, with the proviso that the additive(s) are selected so as to not significantly adversely affect the desired properties of the polycarbonate compositions, in particular impact, flow, chemical resistance, and aesthetics. Additives include fillers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives can be used, for example a combination of a heat stabilizer, mold release agent, ultraviolet light stabilizer, and flame retardant. The additives can be used in the amounts generally known to be effective. In an embodiment, the polycarbonate compositions comprise no more than 10 wt.% or no more than 5 wt.%, for example 0.1 to 10 wt.%, preferably 0.1 to 5 wt.%, more preferably 0.1 to 1 wt.% of an additive comprising at least one of a processing aid, a heat stabilizer, an antioxidant, and an ultra violet light absorber, each based on the total weight of the poly(carbonate-bisphenol arylate ester) compositions.

Exemplary heat stabilizer additives include organophosphites such as triphenyl phosphite, tris-(2,6-dimethylphenyl)phosphite, tris-(mixed mono-and dinonylphenyl)phosphite; phosphonates such as dimethylbenzene phosphonate; phosphates such as trimethyl phosphate, or combinations comprising at least one of the foregoing heat stabilizers. Heat stabilizers are used in amounts of 0.01 to 0.1 wt.% based on the total weight of the poly(carbonate-bisphenol arylate ester) compositions.

Exemplary antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 wt.% based on the total weight of the poly(carbonate-bisphenol arylate ester) compositions.

Exemplary UV absorbing additives include hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB 5411); 2-hydroxy-4-n-octyloxybenzophenone (CYASORB 531); 2-[4,6-bis(2,4-dimethylphenyl)-1,3,5-triazin-2-yl]- 5-(octyloxy)-phenol (CYASORB 1164); 2,2'-(1,4-phenylene)bis(4H-3,1-benzoxazin-4-one) (CYASORB UV-3638); 1,3-bis[(2-cyano-3,3-diphenylacryloyl)oxy]-2,2-bis[[(2-cyano-3, 3-diphenylacryloyl)oxy]methyl]propane (UVINUL 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than or equal to 100 nanometers; or combinations comprising at least one of the foregoing UV absorbing additives. UV absorbing additives are used in amounts of 0.01 to 5 wt.% based on the total weight of the poly(carbonate-bisphenol arylate ester) compositions.

Processing aids include plasticizers, lubricants, and/or mold release agents. There is considerable overlap among these types of materials, which include phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a solvent; waxes such as beeswax, montan wax, and paraffin wax. Such materials are used in amounts of 0.1 to 1 wt.% based on the total weight of the poly(carbonate-bisphenol arylate ester) compositions.

If desired, flame retardants can also be present. Specifically mentioned flame retardants include potassium diphenylsulfone sulfonate, sodium toluene sulfonate, potassium perfluorobutane sulphonate, bisphenol A bis(diphenyl phosphate), resorcinol bis(diphenyl phosphate), phenoxyphosphazene, or a combination comprising at least one of the foregoing.

The poly(carbonate-bisphenol arylate ester) compositions can have good melt viscosities, which aid processing. In an embodiment, the poly(carbonate-bisphenol arylate ester) compositions have a melt mass flow rate of greater than 10 grams per 10 minutes (g/10 min), measured at 300°C/ 1.2 kilograms (kg) at 360 second dwell according to ASTM D 638-13.

The poly(carbonate-bisphenol arylate ester) compositions can have good impact properties. For example, the poly(carbonate-bisphenol arylate ester) compositions have an Izod notched impact energy of at least 600 Joules per meter (J/m), as measured at 23°C according to ASTM D256-10 on a plaque with a 3.2 mm thickness; a flexural modulus of greater than 2200 mega Pascal (MPa), determined according to ASTM D790-17 with a speed of 1.27 millimeters per minute (mm/min); a tensile strength of greater than 70 MPa, a tensile modulus of greater than 2,100 MPa, a tensile elongation of greater than 50%, each determined according to ASTM D638-14 with a speed of 50 mm/min; and/or a multiaxial impact of greater than 60 Joules (J), measured according to ASTM D3763-14 on a plaque with a 3.2 millimeters (mm) thickness.

The poly(carbonate-bisphenol arylate ester) compositions can have good optical properties. In an embodiment, the poly(carbonate-bisphenol arylate ester) compositions have a haze of less than 1.5% and a total transmission of greater than 86%, each measured according to ASTM D1003-00, Procedure A, under D65 illumination, with a 10 degrees observer on a plaque with a 1.0 mm thickness using a Haze-Gard test device.

The poly(carbonate-bisphenol arylate ester) compositions can have a heat deflection temperature of 100°C or higher as measured on a plaque with a 3.2 mm thickness according to ASTM D648-16.

The poly(carbonate-bisphenol arylate ester) compositions can be shaped, formed, casted, or molded into a substrate. Preferably, the poly(carbonate-bisphenol arylate ester) compositions are injection molded to form a thin wall substrate having a thickness of 0.4 millimeters (mm) to 3 mm. In an embodiment the substrate is shaped to the final shape of the article before the substrate is coated with a siloxane urethane acrylate coating.

The substrate can be decorated. In use, a surface of the substrate can be subjected to printing with ink. In an embodiment, an exposed surface of the substrate is subsequently decorated, in particular printed with markings such as alphanumerics, graphics, symbols, indicia, logos, aesthetic designs, multicolored regions, or a combination comprising at least one of the foregoing.

Those skilled in the art will also appreciate that common curing and surface modification processes including heat-setting, texturing, embossing, corona treatment, flame treatment, plasma treatment, and vacuum deposition can further be applied to the above substrates to alter surface appearances and impart additional functionalities to the substrates.

Textures can also be imparted to the substrates using calendaring or embossing techniques. In an embodiment, the substrates can pass through a gap between a pair of rolls with at least one roll having an embossed pattern thereon, to transfer the embossed pattern to a surface of the substrates. Textures can be applied to control gloss or reflection.

The substrates can have a pencil hardness of HB or harder when measured according to the ASTM D3363-00 at 1,000 grams (g) force, which by itself may not meet the stringent anti-scratch resistance requirements for certain mobile phone housing applications.

The inventors have found that applying a siloxane urethane acrylate coating to a substrate containing a poly(carbonate-bisphenol arylate ester) composition significantly improves the scratch resistance of the substrate without adversely affecting the desired properties of the substrate.

Siloxane urethane acrylate coatings are formed from a coating composition comprising a radiation polymerizable siloxane urethane acrylate, which is also referred to as a silicone modified urethane acrylate when a polysiloxane moiety is present. The radiation polymerizable siloxane urethane acrylate can include a reaction product of (i) a polyisocyanate; (ii) a compound having at least one siloxane group and a first isocyanate-reactive group; and (iii) an acrylate or methacrylate having a second isocyanate-reactive group. The first and second isocyanate-reactive groups can be the same or different. The polyisocyanate component (i) can be essentially non-aromatic, and contain less than five percent, specifically less than one percent, more specifically zero wt. % of aromatic groups, based upon a total weight of the polyisocyanate component. For example, non-aromatic polyisocyanates of 4 to 20 carbon atoms can be employed. Saturated aliphatic polyisocyanates include, but are not limited to, isophorone diisocyanate; dicyclohexylmethane-4,4'-diisocyanate; 1,4-tetramethylene diisocyanate; 1,5-pentamethylene diisocyanate; 1,6-hexamethylene diisocyanate; 1,7-heptamethylene diisocyanate; 1,8-octamethylene diisocyanate; 1,9-nonamethylene diisocyanate; 1,10-decamethylene diisocyanate; 2,2,4-trimethyl-1,5-pentamethylene diisocyanate; 2,2'-dimethyl-1,5-pentamethylene diisocyanate; 3-methoxy-1, 6-hexamethylene diisocyanate; 3-butoxy-1,6-hexamethylene diisocyanate; omega, omega'-dipropylether diisocyanate; 1,4-cyclohexyl diisocyanate; 1,3-cyclohexyl diisocyanate; trimethylhexamethylene diisocyanate; or a combination comprising at least one of the foregoing. Aromatic polyisocyanates can also be used. Specific aromatic polyisocyanates include o-diisocyanatobenzene, m-diisocyanatobenzene, p-diisocyanatobenzene, bis(4-isocyanatophenyl)methane, toluene diisocyanate, 3,3'-dichloro-4,4'-diisocyanatobiphenyl, tris(4-isocyanatophenyl)methane, 1,5-diisocyanatonaphthalene, hydrogenated toluene diisocyanate, 1-isocyanatomethyl-5-isocyanato-1,3,3-trimethylcyclohexane, or a combination comprising at least one of the foregoing.

Compound (ii) has at least one siloxane group and an isocyanate-reactive group. Preferably compound (ii) is a polysiloxane having up to 100 siloxane units. The polysiloxane can be a polydialkylsiloxane, a polydiphenylsiloxane, a poly(alkylphenyl siloxane), a copolymer thereof, or a combination comprising at least one of the foregoing. The alkyl groups can be the same or different and can have 1 to 10 carbon atoms, 1 to 6 carbon atoms, 1 to 3 carbon atoms, or 1 carbon atom. Isocyanate-reactive groups may be terminally positioned or positioned along the siloxane backbone. Examples of possible isocyanate-reactive groups include -OH, -SH, -NH₂ and -NHR, wherein R is a C₁₋₄ alkyl. Preferably the isocyanate-reactive groups are hydroxyl groups (-OH).

The compound (iii) can be a monomer that is capable of providing acrylate or methacrylate termini. (also referred to as "end capping monomer") The monomer contains an isocyanate-reactive group such as -OH, -SH, -NH₂ and -NHR, wherein R is a C₁₋₄ alkyl. In an embodiment, the compound (iii) is an acrylate or methacrylate having an -OH group. Specific hydroxyl-terminated compounds that can be used as the end capping monomers include but are not limited to hydroxyalkyl acrylates or methacrylates such as hydroxyethyl acrylate, hydroxyethyl methacrylate, hydroxypropyl acrylate, hydroxypropyl methacrylate, hydroxybutyl acrylate, hydroxybutyl methacrylate, and the like. Hydroxyethyl acrylate and hydroxyethyl methacrylate are specifically mentioned.

The coating composition can further contain a reactive diluent having one or more acrylate or methacrylate moieties per diluent molecule. The reactive acrylate monomer diluent can be mono-, di-, tri-, tetra- or penta functional. In an embodiment, di-functional monomers are employed for the desired flexibility and adhesion of the coating. The monomer can be straight- or branched-chain alkyl; cyclic; or partially aromatic. The reactive monomer diluent can also comprise a combination of monomers that, on balance, result in a suitable viscosity for the coating composition, which cures to form a hard, flexible coating having the desired properties.

Examples of reactive diluents include, but are not limited, to C₆₋₁₂ hydrocarbon diol diacrylates or dimethacrylates such as 1,6-hexanediol diacrylate and 1,6-hexanediol dimethacrylate; tripropylene glycol diacrylate or dimethacrylate; neopentyl glycol diacrylate or dimethacrylate; neopentyl glycol propoxylate diacrylate or dimethacrylate; neopentyl glycol ethoxylate diacrylate or dimethacrylate; 2-phenoxylethyl (meth)acrylate; alkoxylated aliphatic (meth)acrylate; polyethylene glycol (meth)acrylate; lauryl (meth)acrylate, isodecyl (meth)acrylate, isobornyl (meth)acrylate, tridecyl (meth)acrylate; and a combination comprising at least one of the foregoing. In an embodiment, the specific reactive diluent is 1,6-hexanediol diacrylate (HDODA), alone or in combination with another monomer.

The siloxane urethane acrylate coating composition further comprises a solvent, such as water, or a branched or straight chain C₁₋₁₂ alcohol, ether alcohol, diol, polyol, or ether-acetate, or other C₁₋₁₂ organic solvent miscible with these alcohols.

Optionally, the coating composition can further comprise an epoxy acrylate oligomer containing an acrylate functional group, specifically, 1 to 5, and more specifically, 1 to 3 acrylate functional groups. The epoxy acrylate oligomer can have a viscosity of less than or equal to 500 centipoise (cps), specifically, less than or equal to 300 cps, more specifically, less than or equal to 275 cps, and still more specifically, less than or equal to 250 cps at 25°C.

The coating composition can also include an optional polymerization initiator such as a photoinitiator. Generally, a photoinitiator is used if the coating composition is to be cured by ultraviolet light; if the coating composition is to be cured by an electron beam, the coating composition can comprise substantially no photoinitiator.

When the coating composition is cured by ultraviolet light, the photoinitiator can provide reasonable cure speed without causing premature gelation of the coating composition. Further, it can be used without interfering with the optical clarity of the cured coating material. Still further, the photoinitiator can be thermally stable, non-yellowing, and efficient.

Photoinitiators can include, but are not limited to, the following: hydroxycyclohexylphenyl ketone; hydroxymethylphenylpropanone; dimethoxyphenylacetophenone; 2-methyl-1-[4-(methylthio)phenyl]-2-morpholinopropanone-1; 1-(4-isopropylphenyl)-2-hydroxy-2-methylpropan-1-one; 1-(4-dodecylphenyl)-2-hydroxy-2-methylpropan-1-one; 4-(2-hydroxyethoxy)phenyl-(2-hydroxy-2-propyl)ketone; diethoxyacetophenone; 2,2-di-sec-butoxyacetophenone; diethoxy-phenyl acetophenone; bis (2,6-dimethoxybenzoyl)-2,4-, 4-trimethylpentylphosphine oxide; 2,4,6-trimethylbenzoyldiphenylphosphine oxide; 2,4,6-trimethylbenzoylethoxyphenylphosphine oxide; or a combination comprising at least one of the foregoing.

Alternatively or in addition, the coating composition can include a polymerization initiator or can include peroxy-based initiators that promote polymerization under thermal activation. Examples of useful peroxy initiators include benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, 2,5-dimethylhexane-2,5-dihydroperoxide, 2,5-dimethyl-2,5-di(t-butylperoxy)-hex-3-yne, di-t-butylperoxide, t-butylcumyl peroxide, alpha,alpha'-bis(t-butylperoxy-m-isopropyl)benzene, 2,5-dimethyl-2,5-di(t-butylperoxy)hexane, dicumylperoxide, di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, di (trimethylsilyl)peroxide, trimethylsilylphenyltriphenylsilyl peroxide, and the like, and combinations comprising at least one of the foregoing polymerization initiators.

The coating composition can optionally further comprise an additive selected from flame retardants, antioxidants, thermal stabilizers, ultraviolet stabilizers, dyes, colorants, anti-static agents, and the like, or a combination comprising at least one of the foregoing additives, so long as they do not deleteriously affect the polymerization of the coating composition. Selection of particular additives and their amounts can be performed by those skilled in the art.

The coating composition can be applied to the substrate through techniques such as rolling, spraying, dipping, brushing, flow coating, or combinations comprising at least one of the foregoing application techniques.

Once coated, the siloxane urethane acrylate layer is dried to form the uncured coat. The uncured coat can be cured thermally, or by photo initiation.

In an embodiment, a primer layer is disposed on the substrate to be coated prior to the siloxane urethane acrylate coating composition is applied. Useful primer layers include those based on copolymers comprising C₁₋₁₂ alkyl (meth)acrylates, (meth)acrylic acid, substituted methacrylates such as hydroxyalkyl (meth)acrylates, silane substituted methacrylates including alkoxysilane substituted methacrylates, epoxy-substituted methacrylates, and the like. Other non-(meth)acrylate monomers co-polymerizable with the (meth)acrylate monomers including styrenes, C₁₋₁₂ olefins, C₁₋₁₂ vinyl ethers, C₁₋₁₂ (meth)acrylamides, meth(acrylonitrile), and the like.

In another embodiment, there is no primer layer between the siloxane urethane acrylate coating and the substrate; and the siloxane urethane acrylate coating is in direct physical contact with the surface of the substrate. Hydrogen bonding can be present between the siloxane urethane acrylate coating and the substrate.

The overall thickness of the polycarbonate articles can be up to and even exceeding several millimeters. More specifically, the polycarbonate articles can have a thickness (e.g., gage) of 0.5 mm to 4 mm. The thickness of the siloxane urethane acrylate coating varies and can be 1% to 20% or 1 to 10% of the overall thickness of the polycarbonate articles. In an embodiment the siloxane urethane acrylate coating has a thickness of greater than 8 micrometers, for example greater than or equal to 8 micrometers to less than 30 micrometers, or greater or equal to 12 micrometers to less than 30 micrometers, e.g., 8 to 20 micrometers, 10 to 18 micrometers, or 10 to 16 micrometers. It is believed that when the thickness of the siloxane urethane acrylate coating is equal to or less than 8 micrometers, the article may not have a pencil hardness of 2H or harder when measured according to ASTM D3363-00 at 1,000 g force. When the thickness of the siloxane urethane acrylate coating is equal to or greater than 30 micrometers, the coating may adversely affect other desired properties of the article such as impact resistance. In an embodiment, the siloxane urethane acrylate coating has a thickness of 10 micrometers to 18 micrometers; and the polycarbonate article has a pencil hardness of 3H to 4H when measured according to ASTM D3363-00 at 1,000 grams force on the siloxane urethane acrylate coating.

The articles as disclosed herein can have excellent scratch resistance. Pencil hardness is a standard method to test scratch resistance. Pencil lead comes in varying degrees of hardness. The standard hardness of pencils goes (hardest to softest) 6H, 5H, 4H, 3H, 2H, H, F, HB, B, 2B, 3B, 4B, 5B, and 6B. When the pencil lead is drawn across the surface of a sample, a soft lead may not scratch the sample while a hard lead may. Samples can then be rated by the hardness of the pencil lead that will scratch the surface. In an embodiment, the polycarbonate articles as disclosed herein have a pencil hardness of 2H or harder when the coating has a thickness of greater than or equal to 8 micrometers or a pencil hardness of 3H or harder when the coating has a thickness of greater than 8 micrometers, greater than or equal to 10 micrometers, or greater than or equal to 12 micrometers, each determined according to ASTM D3363-00 Pencil Hardness Test at 1,000 g force on the siloxane urethane acrylate coatings. As used herein, a pencil hardness of 2H or harder means that a pencil lead having a hardness of 2H or harder will scratch the siloxane urethane acrylate coating. A pencil hardness of 3H or harder means a pencil lead having a hardness of 3H or harder will scratch the siloxane urethane acrylate coating.

The articles can have excellent adhesion between the siloxane urethane acrylate coating and the substrate. A "cross hatch tape test" as used herein is a test to determine an adhesion strength between a substrate and a coating. The cross hatch tape test is performed following the procedure of ASTM D3359-09. According to this procedure, an adhesion strength can be classified as 0B, 1B, 2B, 4B, 4B, or 5B based on adhesion test results with a rating of 0B indicating the worst adhesion strength and a rating of 5B indicating the best adhesion strength. In an embodiment, the articles as disclosed herein exhibit a cross hatch tape test rating of Grade 5B based on ASTM D3359-09.

In some embodiments, the articles can be a component of a consumer electronic device such as a gaming device, for example, a gaming console, a gaming controller, or a portable gaming device; a mobile phone such as a cellular telephone or a smart phone; a television; a computer such as a personal computer, a tablet computer, or a laptop computer; a personal digital assistant; a portable media player such as a portable music player; a digital camera; an appliance; a power tool; a robot; a toy; a greeting card; or a home entertainment system such as a loudspeaker or a soundbar.

In some embodiments, the article can be an electronic housing for an adapter, a cell phone, a smart phone, a GPS device, a laptop computer, a tablet computer, an e-reader, a copier, or a solar apparatus.

The above described and other features are exemplified by the following examples. In the examples, unless otherwise specified, the percent (%) of the components is weight percent based on the total weight of the composition.

### EXAMPLES

The materials used in the Examples are described in Tables 1 and 2, and the standard tests performed are summarized in Table 3.

**Table 1.**

| Abbreviation | Chemical Description | Source, Vendor |
|---|---|---|
| ITR-PC | ITR (Isophthalic acid-terephthalic acid-resorcinol) - bisphenol A copolyestercarbonate copolymer, ester content 83 mol%, interfacial polymerization, Mw 19,000 to 23,000 g/mol, para-cumyl phenol end-capped | SABIC |
| BPA-PC | Bisphenol A polycarbonate homopolymer with para-cumyl phenol endcaps, Mw = 29,900 to 31,000 g/mol, CAS Reg. No. 111211-39-3 | SABIC |
| IRGAFOS 168 | Tris(di-t-butylphenyl)phosphite | BASF |
| PETS | Pentaerythritol tetrastearate | Lonza |
| UA Coating | Urethane acrylate without silicone modification (S0045375) | Aica |
| SUA coating-1 | Silicone modified urethane acrylate (X21-C1043) | POLY-SIL Co. |
| SUA coating-2 | Silicone modified urethane acrylate (CNBL-100 Lab Sample) | MOMENTIVE |

**Table 2.**

| Component | Unit | ITR-PC based composition | BPA-PC based composition |
|---|---|---|---|
| ITR-PC | wt. % | 99.81 | |
| BPA-PC | wt. % | | 99.65 |
| IRGAFOS 168 | wt. % | 0.04 | 0.05 |
| PETS | wt. % | 0.15 | 0.3 |

**Table 3.**

| Description | Test standards | Conditions |
|---|---|---|
| Melt Mass-flow Rate (MFR) | ASTM D1238-13 | 300 °C, 1.2Kg |
| Tensile Modulus, Tensile Strength, and Tensile Elongation | ASTM D638-14 | 50 mm/min |
| Notched Izod Impact (NII) | ASTM D256-10 | 5 lbf/ft, 23 °C, 3.2 mm |
| Heat deflection temperature (HDT) | ASTM D648-16 | 1.82 MPa, 3.2 mm |
| Flexural Modulus | ASTM D790-17 | 1.27 mm/min |
| Multiaxial Impact (MAI) | ASTM D3763-14 | 3.2 mm |
| Transmission and haze | ASTM D-1003-00, Procedure A | Under D65 illumination, with a 10 degrees observer, at a thickness of 1 mm using a Haze-Gard test device |
| Pencil Hardness | ASTM D3363-00 | 1,000 g |
| Adhesion | ASTM D3359-09 | Cross hatch cutter tester |

Steel wood scratch resistance was tested using grade 0000 steel wool taped to a 1 cm x 1 cm part weighing 1,000 grams. The steel wool side was rubbed back and forth 2500 cycles on the coated surface of the sample to be tested. The steel wool rubbed surface was observed for scratches by naked eyes. The results were reported as "pass" for samples without scratches or "fail" for samples having scratch defects.

### Blending, Extrusion, and Molding Conditions

The compositions were made as follows. All solid additives (e.g., stabilizers, colorants, solid flame retardants) were dry blended off-line as concentrates using one of the primary polymer powders as a carrier and starve-fed via gravimetric feeder(s) into the feed throat of the extruder. The remaining polymer(s) were starve-fed via gravimetric feeder(s) into the feed throat of the extruder as well. It will be recognized by one skilled in the art that the method is not limited to these temperatures or processing equipment.

Extrusion of all materials was performed on a 37 mm Toshiba TEM-37BS corotating twin-screw extruder (length to diameter (L/D) ratio of 40.5/1) with a vacuum port located near the die face. The extruder has 9 zones, which were set at temperatures of 0°C (feed zone), 50°C (zone 1), 100°C (zone 2), 240°C (zones 3 to 5) and 250-260°C (zones 4 to 8). Screw speed was 400 revolutions per minute (rpm) and throughput was 50 kilograms per hour (kg/hr). It will be recognized by one skilled in the art that the method is not limited to these temperatures or processing equipment.

The compositions were molded after drying at 100-110°C for 4 hours on a 100-ton molding machine with 32 mm screw operating at a temperature 270-280°C with a mold temperature of 50∼80°C. It will be recognized by one skilled in the art that the method is not limited to these temperatures or processing equipment.

### Examples 1 and 2

The examples illustrate the physical and optical properties of the ITR-PC based composition shown in Table 2. The examples also show the anti-scratch and anti-abrasion performance of silicone urethane acrylate (SUA) coated ITR-PC samples.

The ITR-PC based composition shown in Table 2 was tested for flow, heat, impact, and optical properties. The results are shown in Table 4.

A molded sample of the ITR-PC composition as shown in Table 2 ("substrate") was coated with a siloxane urethane acrylate coating composition containing a solvent, a photo initiator, and a silicone modified urethane acrylate SUA-1 or SUV-2. The coated sample was heated to remove the solvent, and the coating was subsequently cured under UV. The anti-scratch performance and the anti-abrasion performance of the coated samples were evaluated. The results are shown in Table 5.

**Table 4.**

| ITR-PC based composition | Unit | |
|---|---|---|
| MFR | g/10 min | 11.5 |
| HDT | °C | 117 |
| Tensile Modulus | MPa | 2,309 |
| Tensile Strength | MPa | 71.6 |
| Tensile Elongation | MPa | 59.4 |
| Flexural Modulus | MPa | 2,320 |

| Notched Izod Impact | J/m | 681 |
|---|---|---|
| MAI | J | 69.7 |
| Transmission, 1 mm | % | 87.8 |
| Haze, 1 mm | % | 1.2 |

**Table 5.**

| ITR-PC based composition | Ex 1 | Ex 2 |
|---|---|---|
| Pensile Hardness, before coating | HB | HB |
| Pensile Hardness, after UA coating | | |
| @ 4 µm coating thickness | H | |
| @ 8 µm coating thickness | 2H | 2H |
| @ 12 µm coating thickness | 3H | 4H |
| @ 18 µm coating thickness | 4H | 4H |
| Steel wool test (2,500 cycles), after UA coating | | |
| @ 12 µm - 18 µm coating thickness | Pass | Pass |
| Adhesion 5B | Pass | Pass |

The results indicate that the ITR-PC based composition has balanced mechanical and optical properties. As shown in Table 4, the ITR-PC based composition has a notched Izod impact of higher than 600 J/m determined according to ASTM D256-10 at a sample thickness of 3.2 mm and a MAI of 69.7 J determined accordingly to ASTM D3763-14 at a sample thickness of 3.2 mm. The transmission and haze of the composition are 87.8% and 1.2% respectively each measured according to ASTM D1003-00, Procedure A, under D65 illumination, with a 10 degrees observer on a plaque with a 1.0 mm thickness using a Haze-Gard test device.

Without any coating, a molded sample of the ITR-PC based composition has a pencil hardness of HB, measured according to the ASTM D3363-00 at 1 kg force, which means that a pencil lead having a hardness of HB or harder will scratch the molded sample. With the siloxane urethane acrylate coating having a thickness of 8 micrometers, the pencil hardness of the coated sample can be improved to 2H, measured according to the ASTM D3363-00 at 1 kg force, which means that a pencil lead having a hardness of 2H or harder will scratch the siloxane urethane acrylate coating on the coated sample. When the thickness of the coating increases, the pencil harness increases. As shown in Table 5, when the siloxane urethane acrylate coating has a thickness of 12 micrometers, the pencil hardness of the coated sample can be further improved to 3H for SUA-1 or 4H for SUA-2, measured according to the ASTM D3363-00 at 1 kg force. In addition, the siloxane urethane acrylate coated samples can pass 2,500 cycles steel wool test. In addition, the coated samples exhibit a cross hatch tape test rating of Grade 5B based on ASTM D3359-09.

### Comparative Example 3

The comparative example illustrates the effects of different substrate materials on the pencil hardness of the coated articles.

Table 6 compares the pencil hardness of a molded sample of the ITR-PC based composition shown in Table 2 versus a molded sample of the BPA-PC based composition shown in Table 2, after both being coated with the same siloxane urethane acrylate (SUA-1) coating having the same thickness, and in the same manner as set forth in Example 1. As shown in Table 6, a siloxane urethane acrylate coated ITR-PC sample with a coating thickness of 12 micrometers (µm) has a pencil hardness of 3H. In contrast, a BPA-PC based sample, when coated with the same siloxane urethane acrylate coating and with the same thickness of 12 micrometers (µm), has a pencil hardness of F. The results indicate that not all the polycarbonate compositions can achieve a pencil hardness of 2B or harder, even when coated with the same siloxane urethane acrylate coating with the same coating thickness. The results also show a synergy between the ITR-PC and the siloxane urethane acrylate coating. Ex. 1 improved from a pencil hardness of HB (without coating) to a pencil hardness of 3H (with the coating); i.e., past the pencil hardnesses of F, H, and 2H. CEx. 3 improved from a pencil hardness of B (without coating) to a pencil hardness of F (with the coating); i.e., past the pencil hardnesses of HB. Hence, the large improvement in Ex. 1, i.e., by 4 grades, was unexpected.

**Table 6.**

| | Ex 1 | CEx 3 |
|---|---|---|
| Substrate | ITR-PC based composition | BPA-PC based composition |
| Coating | SUA-1 | SUA-1 |
| Coating thickness | 12 µm | 12 µm |
| Pencil hardness, before coating | HB | B |
| Pencil hardness, after coating | 3H | F |

### Comparative Example 4

The comparative example illustrates the effects of coating materials on the pencil hardness of the coated articles.

Table 7 compares the adhesion and anti-scratch performance of a molded sample of the ITR-PC based composition of Table 2 coated with different coatings. As shown in Table 7, a molded sample of the ITR-PC based composition, when coated with a siloxane urethane acrylate (SUA-1), has a pencil hardness of 3H. Moreover, the coated sample passes the steel wool test (2,500 cycles). In addition, the coated sample exhibits a cross hatch tape test rating of Grade 5B based on ASTM D3359-09. Such a rating is the highest rating determined according to ASTM D3359, indicating that there is excellent adhesion between the urethane acrylate coating and the ITR-PC substrate.

In contrast, a urethane acrylate (without siloxane modification) coated ITR-PC sample has a pencil hardness of only H. Additionally, the coated sample, CEx. 4, fails the steel wood test. Further, the urethane acrylate (without siloxane modification) coated ITR-PC sample does not meet the cross hatch tape test rating of Grade of 5B requirement.

The results indicate that a siloxane urethane acrylate coating provides much more significant improvement on the scratch resistance of ITR-PC based compositions as compared to other coatings. In addition, the adhesion between siloxane urethane acrylate coating and ITR-PC based composition is better than the adhesion between other coatings and the same ITR-PC composition.

**Table 7**

| | Ex 1 | CEx 4 |
|---|---|---|
| Substrate | ITR-PC based composition | ITR-PC based composition |
| Coating material | SUA-1 | UA |
| Coating thickness | 12 µm | 12 µm |
| Pencil Hardness, after coating | 3H | H |
| Steel Wool test, after coating, 2500 cycles | Pass | Fail |
| Adhesion, 5B | Pass | Fail |

Further included in this disclosure are the following specific aspects, which do not necessarily limit the claims.

Aspect 1. A polycarbonate article comprising: a substrate comprising a poly(carbonate-bisphenol arylate ester) composition that comprises, based on the total weight of the poly(carbonate-bisphenol arylate ester) composition, 90 to 99.9 wt.%, preferably 95 to 99.9 wt.% of a poly(carbonate-bisphenol arylate ester), and 0.1 to 10 wt.%, preferably 0.1 to 5 wt.% of an additive comprising at least one of a processing aid, a heat stabilizer, an antioxidant, and an ultra violet light absorber; and a siloxane urethane acrylate coating disposed on at least a portion of a surface of the substrate, the siloxane urethane acrylate coating having a thickness of greater than or equal to 8 micrometers; wherein the polycarbonate article has a pencil hardness of 2H or harder when measured according to ASTM D3363-00 at 1,000 grams force on the siloxane urethane acrylate coating. Optionally the polycarbonate article passes 2,500 cycles steel wood scratch resistance test by using grade 0000 steel wool taped to a 1 cm × 1 cm part wighing 1,000 grams force.

Aspect 2. The polycarbonate article of Aspect 1, wherein the siloxane urethane acrylate coating has a thickness of greater than 8 micrometers to less than 30 micrometers.

Aspect 3. The polycarbonate article of Aspect 1 or Aspect 2, wherein the siloxane urethane acrylate coating has a thickness of 10 micrometers to 18 micrometers; and the polycarbonate article has a pencil hardness of 3H to 4H when measured according to ASTM D3363-00 at 1,000 grams force on the siloxane urethane acrylate coating.

Aspect 4. The polycarbonate article of any one of Aspects 1 to 3, exhibiting a cross hatch tape test rating of Grade 5B based on ASTM D3359-09.

Aspect 5. The polycarbonate article of any one of Aspects 1 to 4, wherein the poly(carbonate-bisphenol arylate ester) comprises bisphenol A carbonate units and arylate ester units of formula (5) 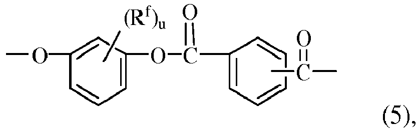 wherein R^{f} is each independently a C₁₋₁₀ hydrocarbyl group, and u is 0 to 4, preferably 0.

Aspect 6. The polycarbonate article of Aspect 5, wherein the poly(carbonate-bisphenol arylate ester) comprises 1 to 20 mol% of bisphenol A carbonate units, 60 to 98 mol% of the arylate ester units of formula (5) wherein u is zero, and optionally, 1 to 20 mol% resorcinol carbonate units, isophthalic acid-terephthalic acid-bisphenol A ester phthalate units, or a combination thereof.

Aspect 7. The polycarbonate article of any one of Aspects 1 to 6, wherein the poly(carbonate-bisphenol arylate ester) composition has one or more of the following properties: a pencil hardness of HB or harder when measured according to the ASTM D3363-00 at 1,000 grams force; a melt mass flow rate greater than 10 g/10min, measured at 300°C/ 1.2 Kg at 360 second dwell according to ASTM D638-14; a heat deflection temperature of 100°C or higher as measured on a plaque with a 3.2 mm thickness according to ASTM D648-16; a haze of less than 1.5% and a total transmission greater than 86%, each measured according to ASTM D1003-00, Procedure A, under D65 illumination, with a 10 degrees observer on a plaque with a 1.0 mm thickness using a Haze-Gard test device; an Izod notched impact energy of at least 600 J/m, as measured at 23°C according to ASTM D256-10 on a plaque with a 3.2 mm thickness; a flexural modulus of greater than 2200 MPa, determined according to ASTM D 790-17 with a speed of 1.27 mm/min; a tensile strength of greater than 70 MPa, a tensile modulus of greater than 2100 MPa, a tensile elongation of greater than 50%, each determined according to ASTM D638-14 with a speed of 50 mm/min; or a multiaxial impact of greater than 60 J, measured according to ASTM D3763-14 on a plaque with a 3.2 mm thickness.

Aspect 8. The polycarbonate article of any one of Aspects 1 to 7, wherein the siloxane urethane acrylate coating is formed from a coating composition comprising a radiation polymerizable siloxane urethane acrylate and a photo initiator.

Aspect 9. The polycarbonate article of any one of Aspects 1 to 8, wherein the radiation polymerizable urethane acrylate coating comprises a reaction product of (i) a polyisocyanate; (ii) a compound having at least one siloxane group and a first isocyanate-reactive group; and (iii) an acrylate or methacrylate having a second isocyanate-reactive group, preferably the first and second isocyanate-reactive groups are independently -OH, -SH, -NH₂ or -NHR, wherein R is a C₁₋₄ alkyl.

Aspect 10. The polycarbonate article of any one of Aspects 1 to 8, wherein the siloxane urethane acrylate coating is 1% to 20% of an overall thickness of the polycarbonate article.

Aspect 11. The polycarbonate article of any one of Aspects 1 to 10, wherein the article has a thickness of 0.5 millimeter to 4 millimeters or 0.5 millimeter to 3 millimeters.

Aspect 12. The polycarbonate article of any one of Aspects 1 to 11, wherein the siloxane urethane acrylate coating is in direct physical contact with the substrate.

Aspect 13. The polycarbonate article of any one of Aspects 1 to 12, wherein the siloxane urethane acrylate coating is bonded to the substrate via hydrogen bonds.

Aspect 14. The polycarbonate article of any one of Aspects 1 to 11, further comprising a primer layer disposed between the substrate and the siloxane urethane acrylate coating.

Aspect 15. The polycarbonate article of any one of Aspects 1 to 14, wherein the polycarbonate article is a component of a consumer electronic device selected from a gaming device, a mobile phone, a global positioning system, a television, a computer, a personal digital assistant, an e-reader, a copier, a portable media player, a digital camera, an appliance, a power tool, a robot, a toy, or a home entertainment system.

Aspect 16. A method for forming a coated article of any one of Aspects 1 to 15 comprising coating the substrate with a siloxane urethane acrylate coating composition to form a coated substrate, wherein the siloxane urethane acrylate coating composition comprises a curing agent, a solvent, a radiation polymerizable siloxane urethane acrylate.

Aspect 17. The method of Aspect 16, wherein coating the substrate comprises flow coating or dip coating.

Aspect 18. The method of Aspect 16 or Aspect 17, further comprising heating the coated substrate to remove the solvent, and curing the radiation polymerizable siloxane urethane acrylate under ultraviolet light.

Aspect 19. The method of any one of Aspects 16 to 18, wherein the curing agent comprises a photo initiator, preferably wherein the photo initiator comprises at least one of hydroxycyclohexylphenyl ketone, hydroxymethylphenylpropanone, dimethoxyphenylacetophenone, 2-methyl-1-[4-(methylthio)phenyl]-2-morpholinopropanone-1; 1-(4-isopropylphenyl)-2-hydroxy-2-methylpropan-1-one, 1-(4-dodecylphenyl)-2-hydroxy-2-methylpropan-1-one, 4-(2-hydroxyethoxy)phenyl-(2-hydroxy-2-propyl)ketone, diethoxyacetophenone, 2,2-di-sec-butoxyacetophenone, diethoxy-phenyl acetophenone, bis (2,6-dimethoxybenzoyl)-2,4-, 4-trimethylpentylphosphine oxide, 2,4,6-trimethylbenzoyldiphenylphosphine oxide, and 2,4,6-trimethylbenzoylethoxyphenylphosphine oxide.

Aspect 20. The method of any one of Aspects 16 to 19, further comprising molding, extruding, casting, or shaping the poly(carbonate-bisphenol arylate ester) composition to form the substrate.

The singular forms "a," "an," and "the" include plural referents unless the context clearly dictates otherwise. "Or" means "and/or" unless clearly indicated otherwise by context. Unless defined otherwise, technical and scientific terms used herein have the same meaning as is commonly understood by one of skill in the art to which this invention belongs. A "combination" is inclusive of blends, mixtures, alloys, reaction products, and the like. "One or more of the foregoing" means at least one the listed material.

Unless otherwise specified herein, any reference to standards, regulations, testing methods and the like refers to the standard, regulation, guidance or method that is in force as of January 1, 2018.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

While typical embodiments have been set forth for the purpose of illustration, the foregoing descriptions should not be deemed a limitation on the scope herein. Accordingly, various modifications, adaptations, and alternatives can occur to one skilled in the art without departing from the spirit and scope herein.

## Claims

1. A polycarbonate article comprising:
a substrate comprising a poly(carbonate-bisphenol arylate ester) composition that comprises, based on the total weight of the poly(carbonate-bisphenol arylate ester) composition,
90 to 99.9 wt.%, preferably 95 to 99.9 wt.% of a poly(carbonate-bisphenol arylate ester), and
0.1 to 10 wt.%, preferably 0.1 to 5 wt.% of an additive comprising at least one of a processing aid, a heat stabilizer, an antioxidant, and an ultra violet light absorber; and
a siloxane urethane acrylate coating disposed on at least a portion of a surface of the substrate, the siloxane urethane acrylate coating having a thickness of greater than or equal to 8 micrometers; wherein the polycarbonate article has a pencil hardness of 2H or harder when measured according to ASTM D3363-00 at 1,000 grams force on the siloxane urethane acrylate coating.

2. The polycarbonate article of claim 1, wherein the siloxane urethane acrylate coating has a thickness of greater than 8 micrometers to less than 30 micrometers on the siloxane urethane acrylate coating.

3. The polycarbonate article of claim 1 or claim 2, wherein the siloxane urethane acrylate coating has a thickness of 10 micrometers to 18 micrometers; and the polycarbonate article has a pencil hardness of 3H to 4H when measured according to ASTM D3363-00 at 1,000 grams force on the siloxane urethane acrylate coating.

4. The polycarbonate article of any one of claim 1 to claim 3, exhibiting a cross hatch tape test rating of Grade 5B based on ASTM D3359-09.

5. The polycarbonate article of any one of claims 1 to 4, wherein the poly(carbonate-bisphenol arylate ester) comprises bisphenol A carbonate units and arylate ester units of formula (5) 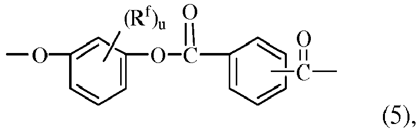 wherein
R^{f} is each independently a C₁₋₁₀ hydrocarbyl group, and
u is 0 to 4, preferably 0.

6. The polycarbonate article of claim 5, wherein the poly(carbonate-bisphenol arylate ester) comprises
1 to 20 mol% of bisphenol A carbonate units,
60 to 98 mol% of the arylate ester units of formula (5) wherein u is zero, and
optionally, 1 to 20 mol% resorcinol carbonate units, isophthalic acid-terephthalic acid-bisphenol A ester phthalate units, or a combination thereof.

7. The polycarbonate article of any one of claims 1 to 6, wherein the poly(carbonate-bisphenol arylate ester) composition has one or more of the following properties:
a pencil hardness of HB or harder when measured according to the ASTM D3363-00 at 1,000 grams force;
a melt mass flow rate greater than 10 g/10min, measured at 300°C/ 1.2 Kg at 360 second dwell according to ASTM D638-14;
a heat deflection temperature of 100°C or higher as measured on a plaque with a 3.2 mm thickness according to ASTM D648-16;
a haze of less than 1.5% and a total transmission greater than 86%, each measured according to ASTM D1003-00, Procedure A, under D65 illumination, with a 10 degrees observer on a plaque with a 1.0 mm thickness using a Haze-Gard test device;
an Izod notched impact energy of at least 600 J/m, as measured at 23°C according to ASTM D256-10 on a plaque with a 3.2 mm thickness;
a flexural modulus of greater than 2200 MPa, determined according to ASTM D 790-17 with a speed of 1.27 mm/min;
a tensile strength of greater than 70 MPa, a tensile modulus of greater than 2100 MPa, a tensile elongation of greater than 50%, each determined according to ASTM D638-14 with a speed of 50 mm/min; or
a multiaxial impact of greater than 60 J, measured according to ASTM D3763-14 on a plaque with a 3.2 mm thickness.

8. The polycarbonate article of any one of claims 1 to 7, wherein the siloxane urethane acrylate coating is formed from a coating composition comprising a radiation polymerizable siloxane urethane acrylate and a photo initiator.

9. The polycarbonate article of claim 8, wherein the radiation polymerizable siloxane urethane acrylate comprises a reaction product of (i) a polyisocyanate; (ii) a compound having at least one siloxane group and a first isocyanate-reactive group; and (iii) an acrylate or methacrylate having a second isocyanate-reactive group, preferably the first and second isocyanate-reactive groups are independently -OH, -SH, -NH₂ or -NHR, wherein R is a Cₗ-₄ alkyl.

10. The polycarbonate article of any one of claims 1 to 9, wherein the polycarbonate article has a thickness of 0.5 millimeter to 4 millimeters.

11. The polycarbonate article of any one of claims 1 to 10, wherein the siloxane urethane acrylate coating is in direct physical contact with the substrate.

12. The polycarbonate article of any one of claims 1 to 11, wherein the siloxane urethane acrylate coating is bonded to the substrate via hydrogen bonds.

13. The polycarbonate article of any one of claims 1 to 10, further comprising a primer layer disposed between the substrate and the siloxane urethane acrylate coating.

14. The polycarbonate article of any one of claims 1 to 13, wherein the polycarbonate article is a component of a consumer electronic device selected from a gaming device, a mobile phone, a global positioning system, a television, a computer, a personal digital assistant, an e-reader, a copier, a portable media player, a digital camera, an appliance, a power tool, a robot, a toy, or a home entertainment system.

15. A method for forming a polycarbonate article of any one of claims 1 to 14 comprising coating the substrate with a siloxane urethane acrylate coating composition to form a coated substrate, wherein the siloxane urethane acrylate coating composition comprises a curing agent, a solvent, a radiation polymerizable siloxane urethane acrylate.
